# EUROPEAN PATENT APPLICATION

(11) **EP 3 620 058 A1**
(43) Date of publication of application: **11.03.2020**
(21) Application number: 18193400.1
(22) Date of filing: 10.09.2018
(51) Int. Cl.: A23C 9/152, C11B 3/00, C11B 7/00, A23L 9/10, A23L 9/20, A23G 9/32

(54) **USE OF BOVINE MILK FAT FRACTION TO ENHANCE TASTE**

(71) Applicant: FrieslandCampina Nederland B.V., 3818LE Amersfoort (NL)
(72) Inventor: BOERBOOM, Franciscus Johannes Gerardus, 6700 AE Wageningen (NL); COUNET, Christine, 6700 AE Wageningen (NL); KLOEK, William, 6700 AE Wageningen (NL)
(74) Representative: FrieslandCampina Nederland B.V.

(57) **Abstract**

Use of a specific bovine milk fat fraction to improve organoleptic properties of dairy based products, such as beverages, spoonable products and milk powder.

## Description

### Field of the invention

The invention relates to the use of a specific bovine milk fat fraction for improving organoleptic properties of a dairy based beverage.

### Background of the invention

Milk and milk ingredients are important nutritional sources for healthy diets.

Many dairy based beverages are prepared by combining individual components that together make up the desired composition. Such beverages typically include recombined milk products, reconstituted milk products, and filled milk products. It is well recognized that such beverages have organoleptic defects compared to normal bovine milk. One reason for this is that it is inherent to such milk based products that some or all of the milk-based ingredients needed to make them have been processed. As a result of such processing they undergo some form of degradation and this may lead to unsatisfactory organoleptic properties. For instance, it is known that whey proteins especially are very heat-sensitive.

US 2014/0205718 discloses recombined milk products and is also concerned with solving the problem of their defective organoleptic properties. In this disclosure it is taught to make products having a reduced carbohydrate content. The resulting milk products are said to have a good taste because the reduced carbohydrate content is assumed to entail less Maillard reaction taking place.

There remains a need for dairy based beverages that taste well and that can be prepared economically and simply. The present invention offers a solution to this problem. It has been found that the organoleptic properties of dairy based products can be improved by incorporating into them a specific bovine milk fat fraction.

### Summary of the invention

The present invention, accordingly, relates to use of a bovine milk fat fraction having
- an SFC10 between 55 and 90 wt.%,
- an SFC20 between 40 and 65% wt.%, and
- an SFC30 between 20 and 50 wt.%
in dairy based products.

### Detailed description of the invention

As described above, the present invention relates to use of a specific bovine milk fat fraction in dairy based products. The specific bovine milk fat fraction used has
- an SFC10 between 55 and 90 wt.%,
- an SFC20 between 40 and 65% wt.%, and
- an SFC30 between 20 and 50 wt.%.

It has been found that use of this bovine milk fat fraction enhances the organoleptic properties, in particular the creaminess, of the dairy based products of which it is a component. This is a surprising finding. It is known to use bovine anhydrous milk fat (AMF) - which is the fat composition as it appears in normal milk - for improving the creaminess of dairy-based beverages. After all, cream and AMF possess the same fat composition. The composition to be used according to the invention differs from AMF and at the same time can be made from AMF by standard means. The present invention, therefore, offers a simple and economical solution to provide dairy products having improved organoleptic properties as compared with the same products comprising AMF.

The dairy based products that benefit particularly from the presence of the bovine milk fat fraction as described above are beverages, spoonable products and milk powder. The term "spoonable product" in relation to dairy based products is well known and means any dairy based product having a consistency that allows it to be consumed with a spoon. Examples are yoghurt, quark, icecream and desserts. Cream cheese is another example of a spoonable product that, on the basis of its consistency, could be consumed with a spoon, although in practice it is used as a spread on e.g. crackers, toast or bread.

All types of beverages that are made using dairy ingredients are susceptible of having their taste improved by incorporating during their preparation the instantly defined bovine milk fat fraction. Thus the invention is useful for beverages that are, or made from, recombined milk products, reconstituted milk products and/or filled milk products.

The bovine milk fat fraction used in accordance with this invention is defined by three values for the so-called Solids Fat Content (SFC) in weight percent based on total weight of fat, more specifically the SFC at 10 °C (SFC10), the SFC at 20 °C (SFC20) and the SFC at 30 °C (SFC30). Accordingly, an SFC10 between 55 and 90 wt.% means that when the fat is equilibrated at a temperature of 10 °C, one will have a liquid fat phase and a solid fat phase, the solid fat phase constituting between 55 and 90 wt.% based on the total weight of the fat. Likewise, an SFC20 between 40 and 65% wt.% means that when the fat is equilibrated at a temperature of 20 °C, the solid fat phase constitutes between 40 and 65 wt.% based on the total weight of the fat. An SFC30 of between 20 and 50 wt.% means that when the fat is equilibrated at a temperature of 30 °C, the solid fat phase constitutes between 20 and 50 wt.% based on the total weight of the fat. Preferably the bovine milk fat fraction used has an SFC10 between 70 and 80 wt.%, an SFC20 between 50 and 62 wt.% and an SFC30 between 20 and 50 wt.%.

The amount of bovine milk fat fraction to be used in accordance with the invention is in the range of 0.1 to 90 wt.%, preferably in the range of 0.3 to 60 wt.%, and most preferably in the range of 1.5 to 60 wt.%, based on the dry weight of the dairy based product in which it is used.

Bovine milk fat fractions to be used in accordance with the present invention can be obtained by fractionation methods that are known in the art, such as solvent fractionation, melt fractionation and supercritical carbon dioxide fractionation. Melt or dry fractionation is preferred.

The invention is further illustrated by the following Examples.

### Examples

### Measurement of (Solid Fat Content) SFC using NMR

The fat used in the Examples and Comparative Examples, i.e. either bovine milk fat fraction or bovine anhydrous milk fat (AMF), was melted at 60°C for 10 minutes to erase crystal memory. After melting, the fat was crystallized in a waterbath at 0 °C for 30 mins. Subsequently the SFC was determined at temperatures ranging from 0 to 50 °C with steps of 10 °C until completely melted. This was performed by taking the samples in NMR-tubes from the 0 °C waterbath to a waterbath at the desired temperature and temper at this temperature for 30 minutes prior to the NMR measurement (parallel method).

All NMR measurements were done on a Brucker Minispec mq20 (low-field NMR spectrometer) with an external refrigerated circulating bath (Haake K-10).

### Example 1 - Preparation of the bovine milk fat fraction from AMF

50 kg of AMF was heated at a temperature of 56 °C. After the AMF had fully liquified it was allowed to cool down to a temperature of 28 °C. After equilibration at this temperature, the mixture was filtered and the solids collected. These solids had the following SFC values: SFC values: SFC10 76.2 wt.%; SFC20 55.6 wt.%; and SFC30 35.2 wt.%.

### Example 2 - Preparation of a beverage using the bovine milk fat fraction

38,7 kg of water was heated to 55 °C. To the heated water were added 3.1 kg of skimmed milk powder. Subsequently, 1.6 kg of the bovine milk fat fraction prepared in Example 1 that had been heated at 70 °C was added. The resulting mixture was emulsified and homogenized at 150 bar, after which the emulsion was pasteurized at 72 °C for 15 seconds.

This milk-based formulation contained, based on dry weight, 60 wt.% of the bovine milk fat fraction.

From this milk-based formulation a recombined milk product was made by mixing the formulation with 16,6 kg of fresh skimmed milk and 400 kg. whole milk. Thereafter the product was UHT (Ultra High Temperature) heat treated.

This recombined milk product according to the invention contained, based on dry weight, 18 wt.% of the bovine milk fat fraction to be used according to the invention and 15 wt.% of unfractionated bovine milk fat, thus a total of 33 wt.% based on dry weight.

### Comparative Example 1 - Use of AMF

Using the same procedure as described in Example 2, a comparative recombined milk product was prepared using the AMF instead of said bovine milk fat fraction. The AMF's SFC values were as follows: SFC10 51.7wt.%; SFC20 20.5 wt.% and SFC30 6.4 wt.%. This comparative recombined milk product thus contained, based on dry weight, 33 wt.% of unfractionated bovine milk fat.

The two recombined milk products according to Example 2 and Comparative Example 1 were tested by a trained sensory panel. All panel members judged the recombined product made using the fractionated bovine milk fat fraction according to Example 2 to be significantly creamier than the comparative product of Comparative Example 1.

### Example 3 - Preparation of another beverage using the bovine milk fat fraction

1,34 kg of water was heated to 45-50°C. To the heated water were added 109 g of skimmed milk powder and 35 g of buttermilk powder. Subsequently, 14 g of the bovine milk fat fraction prepared in Example 1 that had been heated at 75-80 °C was added. The resulting mixture was emulsified and homogenized at 300 bar. Thereafter the product was autoclaved.

The resulting recombined milk product contained, based on total weight, 8,9 wt.% of the bovine milk fat fraction to be used according to the invention.

### Comparative Example 2 - Use of AMF

Using the same procedure as described in Example 3, a comparative recombined milk product was prepared using the same AMF as used in Comparative Example 1 instead of said bovine milk fat fraction. This comparative recombined milk product thus contained, based on total weight, 8,9 wt.% of unfractionated bovine milk fat (i.e. the AMF).

The two recombined milk products of Example 3 and Comparative Example 2 were tested by a screened sensory panel. The majority of panel members judged the recombined product made using the fractionated bovine milk fat fraction according to Example 3 to be significantly creamier than the comparative product of Comparative Example 2.

## Claims

1. Use of a bovine milk fat fraction having
- an SFC10 between 55 and 90 wt.%,
- an SFC20 between 40 and 65% wt.%, and
- an SFC30 between 20 and 50 wt.%
in dairy based products.

2. Use according to claim 1, wherein the bovine milk fat fraction has
- an SFC10 between 70 and 80 wt.%,
- an SFC20 between 50 and 62% wt.%, and
- an SFC30 between 30 and 42 wt.%.

3. Use according to claim 1 or 2, wherein the dairy based product is a beverage.

4. Use according to claim 1 or 2, wherein the dairy based product is a spoonable product.

5. Use according to claim 1 or 2, wherein the dairy based product is a milk powder.
